# EUROPEAN PATENT APPLICATION

(11) **EP 1 481 831 A1**
(43) Date of publication of application: **01.12.2004**
(21) Application number: 04012406.7
(22) Date of filing: 26.05.2004
(51) Int. Cl.: B60J 10/04

(54) **Glass run for motor vehicle**

(30) Priority: 26.05.2003 JP 2003147442; 27.05.2003 JP 2003148562; 27.05.2003 JP 2003148563; 09.02.2004 JP 2004031866
(71) Applicant: Toyoda Gosei Co., Ltd., Nishikasugai-gun, Aichi-ken, 452-8564 (JP)
(72) Inventor: Aritake, Masanori c/o Toyoda Gosei Co.,Ltd., Nishikasugai-gun Aichi-ken 452-8564 (JP); Tamaoki, Kiyotaka c/o Toyoda Gosei Co.,Ltd., Nishikasugai-gun Aichi-ken 452-8564 (JP)
(74) Representative: Kramer - Barske - Schmidtchen

(57) **Abstract**

A glass run (10A; 10B; 10C) for use in a motor vehicle, which is capable of preventing seal lips from closely contacting the inner surface of the side walls (34, 36) of the glass run, and accordingly preventing the generation of noise therein. An opening-side groove (64) is formed in an inner surface of an outside wall (34) near an open end thereof to define a space between the inner surface of the outside wall and a base of an outside seal lip (44) when an end of an outside seal lip contacts the inner surface of the outside wall. A bottom-side groove (54) is formed along the inner surface of the outside wall so as to receive the terminal end (52) of the outside seal lip when it is pushed by a door glass (16). A protruding part (60) having at least one rib (62) is further formed along the inner surface of the outside wall so as to contact the generally widthwise middle portion of the outside seal lip when it is pushed by the door glass.

## Description

### BACKGROUND OF THE INVENTION

### 1. Field of the Invention

The present invention relates to a glass run for attachment to an inner periphery of a door frame of a motor vehicle for guiding a door glass as it is raised and lowered.

### 2. Description of Related Art

As shown in FIG. 1, a glass run 10 is attached to an inner periphery of a door frame 12 of a vehicle door 14 for guiding a door glass 16 which is raised and lowered, thereby providing a seal between the door glass 16 and the door frame 12. FIGS. 2 and 3 show examples of a known glass run 10 disposed in a channel 18 that is provided along the inner periphery of the door frame 12. The glass run 10 is formed by connecting extruded straight parts with molded parts so as to form a configuration that conforms to the door frame 12.

In addition, a door weather strip (not shown) is attached to an outer periphery of the door frame 12, and/or an opening trim weather strip (not shown) is attached to a flange provided in a door opening portion of a vehicle body, thereby providing a seal between the vehicle door 14 and the vehicle body.

The glass run 10 includes an outside wall 20, an inside wall 22 and a bottom wall 24, and has a generally U-shaped cross-section. An outside seal lip 26 and an inside seal lip 28 respectively extend from open or terminal ends of the outside wall 20 and the inside wall 22 and project towards an interior space of the glass run 10. When the glass run 10 is attached to the channel 18, the outer surfaces of the outside wall 20, the inside wall 22 and the bottom wall 24 contact the respective inner surfaces of the channel 18.

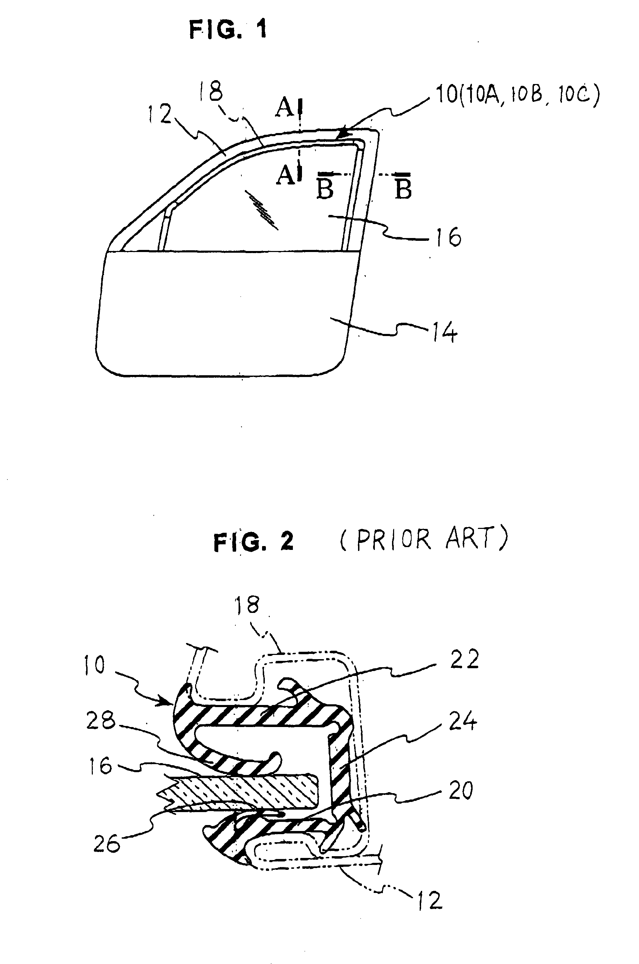

When the door glass 16 is raised, it slides into the interior space of the glass run 10, such that the upper terminal edge of the door glass 16 is sealed and held by the outside seal lip 26 and the inside seal lip 28 (Japanese Laid-open Patent Publication No. 2000-25462, pages 2-3, FIG. 2).

The known glass run 10, however, exhibits the following problem. Namely, while the motor vehicle is moving at a high speed, the door glass 16 may be drawn outwardly, or may vibrate due to vibrations of the vehicle body, thereby pressing the outside seal lip 26 against the outside wall 20 (Japanese Laid-open Patent Publication No. 2002-19473, pages 3-5, FIG. 1(b)).

In this case, the outside seal lip 26 may closely contact an inner surface of the outside wall 20 such that is difficult to separate the seal lip 26 from the outside wall 20 after the door glass 16 stops pressing against the outside seal lip 26. Consequently, sealing between the door glass 16 and the outside seal lip 26, or holding of the door glass 16 with the outside seal lip 26, may become impaired.

To improve the slidability of the inner surface of the outside wall 20 relative to an end of the outside seal lip 26, the inner surface of the outside wall 20 may be coated with a low friction material, such as a silicone coating, etc. But, the coating work is troublesome, because the outside seal lip 26 must be turned up upon coating the inner surface of the outside wall 20.

Moreover, if the coating condition of the low friction material varies, noise may be generated when the door glass 16 shifts inwardly due to the outside seal lip 26, which has contacted the outside wall 20, rapidly separating from an insufficiently coated area of the inner surface of the outside wall 20.

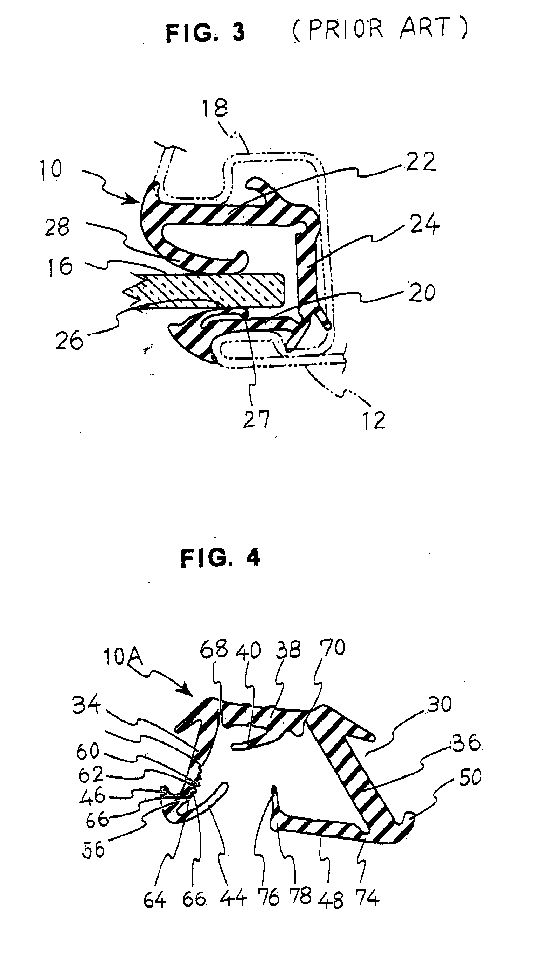

In addition, as shown in FIG. 3, because the terminal end 27 of the outside seal lip 26 projects toward the outside wall 20, it contacts and presses the inner surface of the outside wall 20 earlier than the remaining portion of the outside seal lip 26. As a result, so-called "bottoming" occurs earlier compared to other flat outside seal lips. Consequently, a reaction force from the outside wall 20 increases to strongly press the outside seal lip 26 against the door glass 16, thereby increasing the sliding resistance between the door glass 16 and the outside seal lip 26. As a result, the door glass 16 may not be raised and lowered smoothly, or noise, etc. may be generated due to the door glass 16 rubbing against the outside seal lip 26.

### SUMMARY OF THE INVENTION

It is an object of the present invention to provide a glass run for a motor vehicle, which is capable of decreasing the sliding resistance between a door glass and seal lips, thereby enabling the door glass to be raised and lowered smoothly and preventing side walls of the glass run from closely contacting the seal lips, so as to minimize or prevent the generation of noise by the glass run.

This object is achieved by the invention of claim 1, in which an outside seal lip and an inside seal lip are respectively provided in the outside wall and the inside wall for holding or retaining a terminal edge or end of the door glass, thereby providing a seal between the door frame and the door glass.

By virtue of the opening-side groove provided in the inner surface of the outside wall according to the glass run of claim 1, the base of the outside seal lip does not contact the outside wall when the outside seal lip is pushed by the door glass toward the outside wall. Further, the projecting end of the outside seal lip contacts the inner surface of the outside wall, thereby preventing the generation of the noise that is generated by the known glass run when the outside seal lip separates from the outside wall.

The space provided between the inner surface of the outside wall and the base of the outside seal lip by virtue of the opening-side groove acts as a cushion for the door glass so that the door glass is elastically retained by the glass run. Also, the space prevents the base of the outside seal lip from surely (fully) contacting the inner surface of the outside wall. In addition, when the door glass stops pushing the outside seal lip toward the outside wall, the outside seal lip resiliently returns (preferably immediately) to its original configuration to contact the door glass with good sealing properties.

This object is also achieved by the invention of claim 2, in which the outside seal lip and the inside seal lip, which are respectively provided in the outside wall and the inside wall, again hold or retain a terminal end or edge of the door glass, thereby providing a seal between the door frame and the door glass.

By virtue of the projection of claim 2 having a generally rounded or semicircular cross-section, which is provided along the terminal end of the outside seal lip, and the bottom-side groove being provided along the inner surface of the outside wall, the projection is accommodated in the bottom-side groove of the outside wall when the outside seal lip is pressed by the door glass against the outside wall. As a result, the projection of the outside seal lip can be located outwardly, so that the so-called "bottoming" of the outside seal lip can be delayed, which will decrease the reaction force from the outside wall against the outside seal lip. Consequently, the pushing force of the outside seal lip against the door glass can be decreased, thereby further reducing the sliding resistance of the door glass.

The dimensions of the bottom-side groove preferably may be at least equal to the dimensions of the generally rounded projection that is provided on the outside seal lip. In this case, the generally rounded projection can be entirely, or substantially entirely, accommodated in the bottom-side groove. Accordingly, the projection of the outside seal lip can move by a longer distance, thereby minimizing the pushing force of the outside seal lip against the door glass, which is caused by the reaction force applied from the outside wall.

In another preferred embodiment, depressions may be provided in the inner surface of the outside wall so as to extend in the longitudinal direction thereof. In this case, by virtue of the depressions, the respective contacting areas of the outside wall and the outside seal lip can be reduced. Consequently, the closely contacting force therebetween can be decreased, whereby the outside seal lip can be prevented from closely contacting the outside wall, and noise can be prevented from being generated when the outside seal lip separates from the outside wall.

In addition, since the contacting area of the outside wall and the outside seal lip can be reduced, it may not be necessary to provide a low friction surface or member on the inner surface of the outside wall.

In another preferred embodiment, a bending part may be provided along an open or terminal end of the outside wall so as to bend outwardly of the outside wall. The bending part may preferably be thinner than the remaining part of the outside wall so as to define an opening-side groove.

According to this arrangement, the bending part, along with an outside cover projection, can cover an open end of a side wall of the channel of the door frame. Furthermore, this arrangement assists in providing the space between the open end of the outside wall and the base of the outside seal lip.

In addition, if the bending part is designed to bend outwardly from about the open end of the outside wall, and the outside seal lip is provided so as to extend from an end of the bending part toward the bottom wall, the base of the outside seal lip can be located outwardly of the extension of the outside wall. As a result, when the door glass is raised to contact the outside seal lip of the glass run in an outwardly shifting state, the door glass can be guided inwardly of the outside wall.

Also, if the bending part is thinner than the remaining part of the outside wall, the bending part can deform freely in accordance with variations of the dimensions of the channel, thereby sufficiently covering the open end of the channel.

In another preferred embodiment, the outside seal lip may have a widthwise length that less than the widthwise length of the inside seal lip. In addition, the outside seal lip may convexly curve into the interior of the glass run. According to this arrangement, the raised door glass can be guided near the outside wall of the door frame. As result, the difference in level (or height) between the door glass and the door frame can be reduced, thereby decreasing the air resistance therein, and making the body surface flat. Consequently, the overall appearance of the body surface can be improved.

In addition, if the outside seal lip curves convexly into the interior of the glass run, the outside seal lip can contact the door glass in a line contact so as to decrease the sliding resistance of the outside seal lip against the door glass, thereby enabling smooth raising and lowering of the door glass.

In another preferred embodiment, a low friction surface or member may be provided on one or more of the inner surfaces of the outside wall, the inside wall and the bottom wall, as well as the outside seal lip and the inside seal lip. For example, if the low friction surface or member is provided on all of the contacting surfaces between the door glass and the glass run, and between the seal lips and the side walls, the sliding friction between the door glass and the glass run, and between the seal lips and the side walls, can be reduced, thereby enabling smooth raising and lowering of the door glass, and preventing noise from being generated when the seal lips contact and separate from the side walls.

The above noted object is also achieved by the glass run of claim 6, in which the outside seal lip and the inside seal lip again hold or retain a terminal end or edge of the door glass, and provide a seal between the door frame and the door glass.

By providing a protruding part on the inner surface of the outside wall of the glass run for attachment to at least the vertically extending sides of the door frame, the protruding part of the outside wall can support the outside seal lip which is pushed by the door glass drawn outwardly while moving at high speeds, whereby the outside seal lip can contact the outside wall in a line contact without closely contacting the same in a face contact. In addition, by providing at least one rib on the protruding part, the contacting area of the outside wall and the outside seal lip can be reduced, thereby decreasing the closely contacting force between the outside wall and the outside seal lip. Moreover, the outside seal lip can be prevented from generating noise when the outside seal lip separates from the outside wall.

In a preferred embodiment, the protruding part may be provided on the inner surface of the outside wall of the glass run for attachment to the vertically extending sides and upper sides of the door frame so as to contact about a widthwise middle of the outside seal lip apart from the end thereof. According to this arrangement, a level difference is created between the protruding part and the part that contacts the end of the outside seal lip. Therefore, when the door glass pushes the outside seal lip, the end of the outside seal lip can be accommodated in the outside wall, whereby the door glass can be prevented from strongly pushing the outside seal lip.

If the protruding part is provided in the glass run for attachment to the vertically extending sides and upper sides of the door frame, when the outside seal lip repeatedly contacts and separates from the door glass, which is raised and lowered, the outside seal lip can be prevented from maintaining a close contact with the outside seal wall, and from abruptly peeling off the outside wall, which abrupt peeling would generate noise.

In addition, if the outside seal lip is prevented from maintaining contact with the outside wall, the outside seal lip can surely and reliably contact the door glass, thereby exhibiting excellent sealing properties.

Preferably, one or more ribs are provided on a surface of the protruding part so as to extend along a longitudinal direction of the outside wall. In this case, the contacting area of the outside wall and the outside seal lip can be reduced, and consequently, the closely contacting force therebetween can be decreased, whereby the outside seal lip can be prevented from closely (facially) contacting the outside wall.

In addition, the outside seal lip can be surely supported by the ribs of the protruding part over the entire surface of the outside sealing lip. The contacting pressure can be distributed to each rib (if multiple ribs are provided), which would have the effect of reducing the contacting pressure applied to each rib. As a result, deformation of each rib is restrained to decrease the contacting area with the outside seal lip.

Other objects, features, and characteristics of the present invention will become apparent upon consideration of the following description and the appended claims with reference to the accompanying drawings, all of which form a part of this specification.

### BRIEF DESCRIPTION OF THE DRAWINGS

FIG. 1 is a front view of a door of a motor vehicle.
FIG. 2 is a cross-sectional view of a known glass run, which is taken along the line B-B of FIG. 1;
FIG. 3 is a cross-sectional view of another known glass run, which is taken along the line B-B of FIG. 1;
FIG. 4 is a cross-sectional view of a first representative embodiment of a glass run, which is shown prior to attachment to an upper side of a door frame:

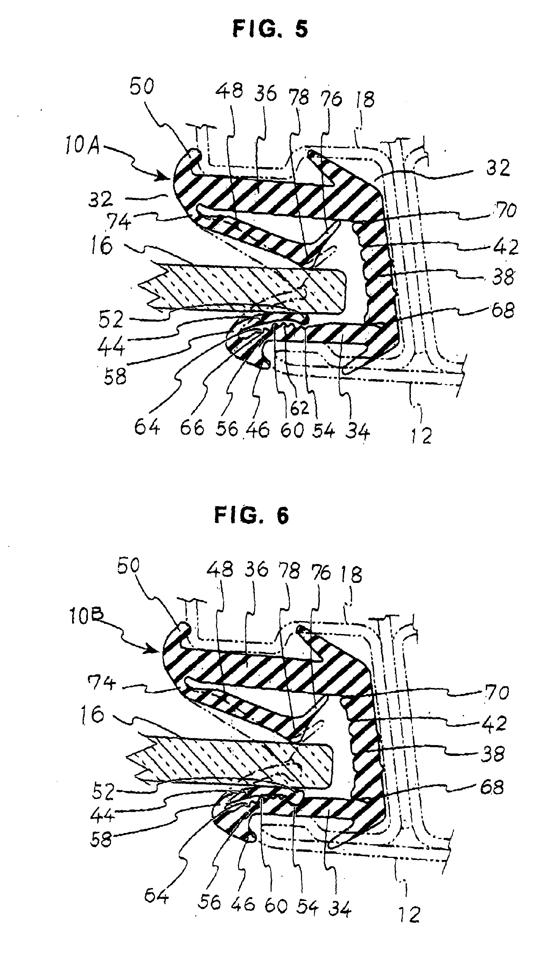

FIG. 5 is a cross-sectional view of a different portion of the first representative embodiment of a glass run, which is shown after attachment to a rear vertical side of a door frame:
FIG. 6 is a cross-sectional view of a second representative embodiment of a glass run, which is shown after attachment to a rear vertical side of a door frame; and

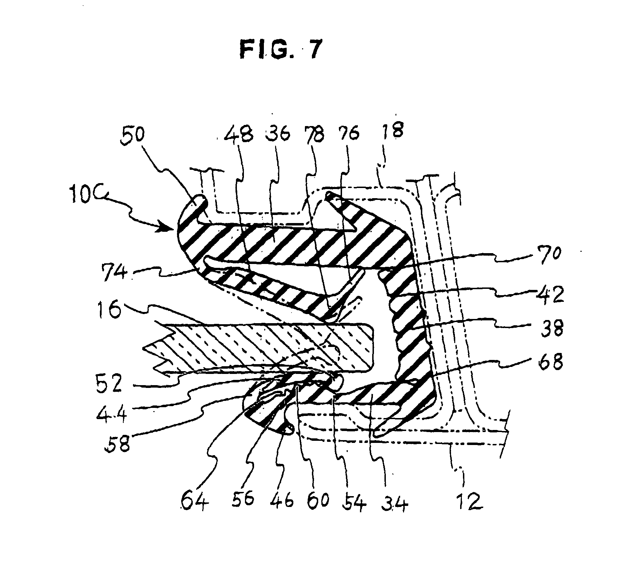

FIG. 7 is a cross-sectional view of a third representative embodiment of a glass run, which is shown after attachment to a rear vertical side of a door frame.

### DETAILED DESCRIPTION OF THE PREFERRED EMBODIMENTS

Preferred embodiments will be explained with reference to FIGS. 1 and 4 through 7. As shown in FIG. 1, a door frame 12 is provided along an upper part of a vehicle door 14, and a door glass 16 is slidably supported by the door frame 12. A channel 18 is defined in an inner periphery of the door frame 12, and a glass run 10A is attached within the channel 18 to guide the door glass 16 as it is raised and lowered, thereby providing a seal between the door glass 16 and the door frame 12.

The glass run 10A includes straight parts, which are formed by extrusion, and molded parts, which are formed by molding and are utilized to connect the extruded straight parts to each other. The extruded straight parts are respectively attached to an upper side, a rear vertically extending side and a front vertically extending side of the door frame 12. These extruded straight parts are connected to each other with the molded parts so as to conform to the door frame 12.

FIG. 4 is a cross-sectional view of an extruded part 30 of the glass run 10A, which view is taken along line A-A of FIG. 1, and FIG. 5 is a cross-sectional view of an extruded part 32 of the glass run 10A, which view is taken along line B-B of FIG. 1.

As shown, the extruded parts 30 and 32 of the glass run 10A respectively include an outside wall 34, an inside wall 36 and a bottom wall 38, which together have a generally U-shaped cross-section. The extruded part 30 for attachment to the upper side of the door frame 12 includes a lip 40 projecting from the bottom wall 38. On the other hand, the extruded part 32 for attachment to the vertically extending side of the door frame 12 includes depressions (recesses or grooves) 42 in the bottom wall 38. The remaining cross-section is generally identical over the entire length of the glass run 10A.

An outside seal lip 44 extends from an open or terminal end of the outside wall 34 into an interior space of the glass run 10A. An outside cover projection 46 extends from the open or terminal end of the outside wall 34 outwardly of the vehicle body. An inside seal lip 48 extends from an open end of the inside wall 36 into an interior of the glass run 10A. An inside cover projection 50 extends from the open end of the inside wall 36 inwardly of the vehicle body.

When the glass run 10A is attached within the channel 18, an outer surface of the outside wall 34 and a rear surface of the outside cover projection 46 contact an outside wall of the channel 18. In addition, an outer surface of the inside wall 36 and a rear surface of the inside cover projection 50 contact an inside wall of the channel 18. Therefore, the open or terminal ends of the outside wall and the inside wall of the channel 18 are covered by the glass run 10A, and the glass run 10A is held by the channel 18.

The thickness and widthwise length of the outside seal lip 44 are preferably less than the thickness and widthwise length of the inside seal lip 48. By arranging the outside seal lip 44 in this manner, the door glass 16 can be positioned closer to the outside wall of the channel 18, thereby reducing the difference in level (or height) between the door glass 16 and the door frame 12. Consequently, air resistance therein is decreased, thereby providing a smooth body surface without unevenness that improves the aesthetic appearance thereof.

In addition, when the door glass 16 is disposed in the raised position, the outside seal lip 44, which curves convexly towards the door glass 16, can readily and elastically flex or bend so as to contact the door glass 16 in a line contact. Therefore, when the door glass 16 is raised and lowered, the resultant sliding resistance of the outside seal lip 44 against the door glass 16 can be decreased to ensure smooth sliding of the door glass 16.

As shown in FIG. 4, along the upper side of the door frame 12, the outside seal lip 44 has an identical thickness from a base end to a tip end thereof. On the other hand, as shown in FIGS. 5 through 7, along the vertically extending sides of the door frame 12, a projection 52 having a generally rounded or semicircular cross-section projects from a tip or terminal end of the outside seal lip 44.

While the motor vehicle is moving with the door glass 16 slightly lowered, the door glass 16 vibrates in the width or lateral direction of the vehicle body due to vibrations, etc. of the vehicle body. In particular, along the vertically extending side of the door glass run 10A, the outside seal lip 44 is pushed by the door glass 16, and the projection 52 of the outside seal lip 44 contacts the inner surface of the outside wall 34. In the embodiments shown in FIGS. 5 and 6, the respective inner surfaces of the outside wall 34 of the glass runs 10A and 10B are provided with a bottom side-groove 54 having a cross-section approximately conforming to the generally rounded or semicircular cross-section of the projection 52. The groove 54 preferably extends continuously along the longitudinal direction of the outside wall 34.

When the outside seal lip 44 is pressed against the outside wall 34 by the door glass 16, the projection 52 of the outside seal lip 44 is fitted in the groove 54 of the outside wall 34. Consequently, the occurrence of so-called "bottoming" of the outside seal lip 44 is delayed, and the reaction force from the outside wall 34 is decreased to reduce the force applied from the outside seal lip 44 to the door glass 16. Accordingly, the sliding resistance between the outside seal lip 44 and the door glass 16 can be decreased.

In the embodiment shown in FIG. 7, at least a portion of the inner surface of the outside wall 34 of a glass run 10C, which is continuous with the groove 54, is inclined. Preferably, the inclined inner surface may be coated with a low friction material. According to this arrangement, the projection 52 of the outside seal lip 44 is guided by the inclined inner surface and the low friction material, and consequently, can readily and reliably enter the groove 54.

An opening-side groove 64 is preferably formed along the open or terminal end of the outside wall 34 to make the outside wall 34 thinner than the remaining part thereof. Further, a bending part 56 preferably extends outwardly from the thin open (terminal) end of the outside wall 34 in order to cover the terminal end of the outside wall of the channel 18. The opening-side groove 64 participates in forming a space between the inner surface of the outside wall 34 and a facing surface of the outside seal lip 44 along its base end 58.

The outside seal lip 44 and the outside cover projection 46 respectively extend from an end of the bending part 56. Along the vertically extending side of the glass run 10A, the base end 58 of the outside seal lip 44 is located outside an extension of the outside wall 34 when the door glass 16 is raised to contact the outside seal lip 44. Accordingly, when the terminal edge or end of the door glass 16 shifts outwardly, the door glass 16 can be guided by the outside seal lip 44 into the interior of the glass run 10A, thereby ensuring the smooth sliding of the door glass 16, and stable holding thereof at its closed position.

Since the bending part 56 is thinner than the remaining part of the outside wall 34, as described above, it can flex and cover the opening of the channel 18 irrespective of variations in the dimensions of the channel 18.

A protruding part 60 is provided along the inner surface of the outside wall 34 so as to continuously extend in a longitudinal direction thereof. The protruding part 60 is provided near the open or terminal end of the outside wall 34 so as to contact a generally widthwise middle portion of the outside seal lip 44, which is pushed by the door glass 16.

The protruding part 60 includes a plurality of ribs 62 that project inwardly of the inner surface of the outside wall 34. The bottom-side groove 54 and the opening-side groove 64 are provided on the respective sides of the protruding part 60.

When the door glass 16 is drawn outwardly and thus pushes the outside seal lip 44, the outside seal lip 44 contacts the protruding part 60 of the outside wall 34 and the projection 52 of the outside seal lip 44 is fitted in the groove 54 that extends along the bottom-side of the protruding part 60. As a result, the occurrence of so called "bottoming" of the outside seal lip 44 is delayed, and the reaction force from the outside wall 34 against the projection 52 of the outside seal lip 44 is decreased. Consequently, the pushing force of the outside seal lip 44 against the door glass 16 does not increase so as not to obstruct shifting and sliding of the door glass 16.

As described above, when the outside seal lip 44 is pressed against the outside wall 34 by the door glass 16, the projection 52 of the outside seal lip 44 is accommodated in the groove 54 provided in the outside wall 34. Accordingly, the pushing force of the projection 52 of the outside seal lip 44 against the door glass 16, as well as the sliding resistance between the outside seal lip 44 and the door glass 16, can be decreased.

Depressions (or recesses) 66 are provided between adjacent ribs 62 of the inner surface of the outside wall 34. When the outside seal lip 44 is pushed by the door glass 16 toward the outside wall 34, and the outside seal lip 44 contacts the inner surface of the outside wall 34, the contacting area therebetween decreases to prevent the outside seal lip 44 from closely contacting the outside wall 34.

A base end of the bending part 56 is made thin by the groove 64 which extends along the ribs 62. Accordingly, the bending part 56 can readily flex in conformity with the contour of the channel 18 so as to closely contact the channel 18.

When the outside seal lip 44 is pressed against the outside wall 34 by the door glass 16, the groove 64 also serves to prevent the outside seal lip 44 from closely contacting the inner surface of the outside wall 34.

In these embodiments, the ribs 62 and the depressions (recesses) 66 are provided along the inner surface of the outside wall 34. However, the ribs 62 and depressions 66 are not required to be provided where the outside seal lip 44 does not closely contact the outside wall 34.

Grooves 68 and 70 are provided along joints (connecting portions) between the outside wall 34 and the bottom wall 38 and between the inside wall 36 and the bottom wall 38. These grooves 68 and 70 enable the outside wall 34 and the inside wall 36 to flexibly bend relative to the bottom wall 38, whereby the glass run 10A can be readily fitted in the channel 18 of the door frame 12.

As shown in FIG. 4, the lip 40 projects from the bottom wall 38 of the glass run 10A for attachment to the upper side of the door frame 12. When the door glass 16 is raised to contact the bottom wall 38 of the glass run 10A, the lip 40 serves as a cushion for the door glass 16. Accordingly, the door glass 16 can be prevented from strongly pushing against the bottom wall 38. To decrease the sliding resistance against the door glass 16, the surface of the lip 40 may have an integral low friction surface and/or a low friction member may be applied or adhered to the surface of the lip 40.

As shown in FIGS. 5 through 7, none of the glass runs 10A, 10B and 10C for attachment to the vertically extending sides of the door frame 12 is provided with a lip corresponding to the lip 40 of FIG. 4. Instead, a plurality of depressions 42 may be provided in the inner surface of the bottom wall 38 so as to extend in a longitudinal direction thereof and thereby decrease the sliding resistance. In addition or in the alternative, a low friction surface or member may be applied to the inner surface of the bottom wall 38.

Any material exhibiting low friction resistance against the door glass 16 may be used as the low friction surface or member. For example, TPO sheets, unwoven fabrics of fluorocarbon resin, polyethylene sheets, silicone coats, urethane coats, etc. may be used.

The inside wall 36 has a generally plate-shaped cross-section. As described above, the outer surface of the inside wall 36 and the rear surface of the inside cover projection 50 are brought into contact with the inside wall of the channel 18, whereby the glass run 10A is held in the channel 18.

The inside seal lip 48 extending from the open end of the inside wall 36 has a generally plate-shaped cross-section. A base end 74 of the inside seal lip 48 is made thin so as to enable the inside seal lip 48 to bend toward the inside wall 36.

A projection 76 projects generally perpendicularly from a tip end 78 of the inside seal lip 48 and extends or projects generally toward the bottom wall 38 when the glass run 10A is resting state (i.e., the door glass 16 is not inserted into the channel 18).

When the glass run 10A (10B and 10C) is inserted into and attached to the channel 18, and the inside seal lip 48 is pushed by the door glass 16 toward the inside wall 36, the inside seal lip 48 pivots about the base end 74 thereof. When the door glass 16 significantly vibrates, a terminal end of the projection 76 of the inside seal lip 48 contacts the inside wall 36.

Hereinafter, a representative method for making the glass run 10A (10B and 10C) will be explained. First, straight parts are formed of a soft type solid material by extrusion into a generally U-shaped cross-section such that the side walls are slightly spread apart toward open ends thereof. This cross-section enables the glass run to impart a pressing force against the side walls of the channel 18 upon attachment therein, and facilitates the coating work of the low friction material on the outside wall 34, the inside wall 36, the bottom wall 38, outside seal lip 40 and the inside seal lip 48.

Examples of the solid material for the straight parts include synthetic rubber such as EPDM rubber, thermoplastic elastomers such as polyolefin elastomer, or soft synthetic resins, such as soft vinyl chloride, etc.

In the case of synthetic rubber, after extrusion, it is heated for vulcanization in a vulcanization chamber with hot air, high frequency wave, etc, whereas in the case of thermoplastic elastomer or soft synthetic resin, it is cooled for solidification. Then, the extruded straight parts are cut to have a desired length.

Next, molded parts are formed by placing ends of the extruded straight parts in a mold, and injecting a solid material for the molded parts in a cavity of the mold. The molded parts generally have an identical cross-section to that of the extruded straight parts. It is preferable that the material for the molded parts is of the same kind as the solid material for the extruded parts. In the case of synthetic rubber, after being injected into the mold, the mold is heated to vulcanize the synthetic rubber. Due to vulcanization, the extruded parts and the molded parts, each being composed of an identical material or materials of the same kind, become an integral body. In the case of thermoplastic elastomer or soft synthetic resin, the extruded parts and the molded parts are welded to each other by the heat and pressure of the molten material that is injected into the mold.

As described above, in the embodiments described herein, the bending part 56 is provided along the open or terminal end of the outside wall 34 of the glass run 10A, the protruding part 60 having an arc-shaped cross-section is provided adjacent to the bending part 56, and at least one rib 62 is provided on the surface of the protruding part 60. This arrangement prevents the base end of the outside seal lip 44 from contacting the inner surface of the outside wall 34, and reduces the contacting area between the end of the outside seal lip 44 and the inner surface of the outside wall 34. Consequently, the outside seal lip 44 can be reliably prevented from closely contacting the outside wall, and accordingly, the occurrence of noise, which has been encountered by known designs when the outside seal lip 44 separates the inner surface of the outside wall 34, is prevented.

Preferably, the groove 54 is provided adjacent to the protruding part 60. In this case, the projecting end 52 of the outside seal lip 44 can be fitted into the groove 54. In a modified embodiment, an inclined or angled surface is provided along the interface of the protruding part 60 and the groove 54. According to this arrangement, the projecting end 52 of the outside seal lip 44 can slide on the inclined surface and fit in the groove 54.

Furthermore, if the bending part 56 is provided in the outside wall 34, the outside seal lip 52 can be extended close to the outside wall 34 without closely contacting the outside wall. By providing the groove 54 in the outside wall 34, the occurrence of bottoming of the outside seal lip 44 is delayed. Accordingly, when the door glass 16 shifts outwardly, an increase of the reaction force applied from the outside seal lip 44 to the door glass is prevented.

As described above, an opening-side groove is preferably provided along an inner surface of an outside wall of a glass run so that when an outside seal lip is pressed by the door glass against the inner surface of the outside wall, a base of the outside seal lip is prevented from contacting the inner surface of the outside wall. Accordingly, noise is prevented from being generated when the outside seal lip separates from the outside wall.

In addition, a projection having a generally rounded or semicircular cross-section preferably is provided along the end of the outside seal lip, and a bottom-side groove is provided in the inner surface of the outside wall for accommodating the projection of the outside seal lip. In this preferred embodiment, when the outside seal lip is pushed by the door glass, and contacts the outside wall, the projection of the outside seal lip is accommodated in the bottom-side groove of the outside wall to reduce the reaction force therefrom. Consequently, the sliding resistance between the outside seal lip and the door glass is decreased, thereby enabling smooth raising and lowering of the door glass.

Furthermore, a protruding part including a plurality of ribs preferably is provided along the inner surface of the outside wall of the glass run. When the outside seal lip is pressed by the door glass against the outside wall, the outside seal lip is prevented from maintaining contact with the outside wall so as to prevent or minimize the generation of noise, which has been generated by known glass runs when the outside seal lip separates from the inner surface of the outside wall of the known glass runs. Accordingly, the present glass runs exhibit good sealing properties between the door glass and the door frame.

This application is related to and claims priority from Japanese patent Application Nos. 2003-147442, 2003-148562, 2003-148563 and 2004-031866, which are incorporated herein by reference.

Each of the features and teachings disclosed above may be utilized separately or in conjunction with other features and teachings to provide improved glass runs and methods for designing and using the same. Representative examples of the present invention, which examples utilize many of these additional features and teachings both separately and in combination, were described in detail with reference to the attached drawings. This detailed description is merely intended to teach a person of skill in the art further details for practicing preferred aspects of the present teachings and is not intended to limit the scope of the invention. Therefore, combinations of features and steps disclosed in the detailed description may not be necessary to practice the invention in the broadest sense, and are instead taught merely to particularly describe representative examples of the present teachings.

Moreover, the various features of the representative examples and the dependent claims may be combined in ways that are not specifically and explicitly enumerated in order to provide additional useful embodiments of the present teachings. In addition, it is expressly noted that all features disclosed in the description and/or the claims are intended to be disclosed separately and independently from each other for the purpose of original disclosure, as well as for the purpose of restricting the claimed subject matter independent of the compositions of the features in the embodiments and/or the claims. It is also expressly noted that all value ranges or indications of groups of entities disclose every possible intermediate value or intermediate entity for the purpose of original disclosure, as well as for the purpose of restricting the claimed subject matter.

## Claims

1. A glass run (10A; 10B; 10C) for use in a motor vehicle, the glass run being arranged to be provided along an inner periphery of a door frame (12) of a vehicle door (14) for guiding a door glass (16) as it is raised and lowered, comprising:
an outside wall (34), an inside wall (36) and a bottom wall (38), which have a generally U-shaped cross-section in combination and define an interior space therein,
wherein said outside wall includes an outside seal lip (44), and said inside wall includes an inside seal lip (48), said outside seal lip and said inside seal lip respectively extending into the interior space defined by said outside wall, said inside wall and said bottom wall, the inside and outside seal lips being adapted to seal an outer edge of the door glass, and
an opening-side groove (64) provided along an inner surface of said outside wall at a connecting portion that joins with a base of said outside seal lip, the opening-side groove being arranged and constructed such that, when said outside seal lip is pressed by the door glass, and a terminal end of the outside seal lip contacts said inner surface of said outside wall, a space is defined by said opening-side groove between said inner surface of said outside wall and a facing surface of said outside seal lip.

2. A glass run (10A; 10B; 10C) for use in a motor vehicle, the glass run being adapted to be provided along an inner periphery of a door frame (12) of a vehicle door (14) for guiding a door glass (16) as it is raised and lowered, comprising:
an outside wall (34), an inside wall (36) and a bottom wall (38), which have a generally U-shaped cross-section in combination and define an interior space therein,
wherein said outside wall includes an outside seal lip (44), and said inside wall includes an inside seal lip (48), said outside seal lip and said inside seal lip respectively extending into the interior space, the inside and outside seal lips being adapted to seal an outer edge of the door glass,
a projection (52) having a generally rounded cross-section provided at a terminal end of said outside seal lip, and
a bottom-side groove (54) provided along an inner surface of said outside wall, wherein said projection and said groove are arranged and constructed such that, when said outside seal lip is pressed by the door glass and said projection contacts said outside wall, said projection is accommodated in said bottom-side groove.

3. A glass run as claimed in claim 2, wherein the dimensions of said bottom-side groove (54) are substantially identical to the dimensions of said projection (52).

4. A glass run as claimed in claim 2 or 3, further comprising one or more depressions (66) provided along said inner surface of said outside wall (34) so as to extend along the longitudinal direction thereof.

5. A glass run as claimed in any preceding claim, further comprising:
a protruding part (60) longitudinally extending along at least a portion of an inner surface of said outside wall (34) that is adapted to be attached to a vertical extending side of the door frame, the protruding part being arranged so as to contact said outside seal lip (44) when said outside seal lip is pressed by the door glass (16) towards the outside wall, and
at least one rib (62) defined along the surface of said protruding part so as to extend along the longitudinal direction of said outside wall.

6. A glass run (10A; 10B; 10C) for use in a motor vehicle, the glass run being adapted to be provided along an inner periphery of a door frame (12) of a vehicle door (14) for guiding a door glass (16) as it is raised and lowered, comprising:
an outside wall (34), an inside wall (36) and a bottom wall (38), which have a generally U-shaped cross-section in combination and define an interior space therein,
wherein said outside wall includes an outside seal lip (44), and said inside wall includes an inside seal lip (48), said outside seal lip and said inside seal lip respectively extending into the interior space, the inside and outside seal lips being adapted to seal an outer edge of the door glass,
a protruding part (60) longitudinally extending along at least a portion of an inner surface of said outside wall that is adapted to be attached to a vertical extending side of the door frame, the protruding part being arranged so as to contact said outside seal lip when said outside seal lip is pressed by the door glass towards the outside wall, and
at least one rib (62) defined along the surface of said protruding part so as to extend along the longitudinal direction of said outside wall.

7. A glass run as claimed in claim 6, wherein said protruding part (60) is disposed so as to contact a generally widthwise middle portion of said outside seal lip (44).

8. A glass run as claimed in claim 6 or 7, wherein a plurality of the ribs (62) are provided on the surface of said protruding part (60).

9. A glass run as claimed in any one of claims 2-8, further comprising an opening-side groove (64) provided along an inner surface of said outside wall (34) at a connecting portion that joins with a base of said outside seal lip (44), the opening-side groove being arranged and constructed such that, when said outside seal lip is pressed by the door glass (16), and a terminal end of the outside seal lip contacts said inner surface of said outside wall, a space is defined by said opening-side groove between said inner surface of said outside wall and a facing surface of said outside seal lip

10. A glass run as claimed in any of claims 1 or 6-8, further comprising:
a projection (52) having a generally rounded cross-section provided at a terminal end of said outside seal lip, and
a bottom-side groove (54) provided along an inner surface of said outside wall, wherein said projection and said groove are arranged and constructed such that, when said outside seal lip is pressed by the door glass and said projection contacts said outside wall, said projection is accommodated in said bottom-side groove

11. A glass run as claimed in any preceding claim, further comprising a bending part (56) provided along a terminal end of said outside wall (34) and being formed so as to bend outwardly, said bending part being thinner than the remaining part of said outside wall.

12. A glass run as claimed in any preceding claim, wherein said outside seal lip (44) has a widthwise length that is less than the widthwise length of said inside seal lip, the outside seal lip being convexly curved toward the door glass.

13. A glass run as claimed in any preceding claim, further comprising a low friction surface or member provided on one or more of the inner surfaces of said outside wall (34), said inside wall (36) and said bottom wall (38), and the door glass facing surfaces of said outside seal lip (44) and said inside seal lip (48).
